## Europäisches Patentamt

## European Patent Office

## Office européen des brevets

(19)

(11) Publication number: **0 336 580**
**A2**

# (12) EUROPEAN PATENT APPLICATION

(21) Application number: **89302577.5**

(51) Int. Cl.⁴: **G06F 15/40**

(22) Date of filing: **16.03.89**

(30) Priority: **08.04.88 US 179348**

(43) Date of publication of application:
**11.10.89 Bulletin 89/41**

(84) Designated Contracting States:
**BE CH DE FR GB IT LI NL SE**

(71) Applicant: **International Business Machines Corporation**
**Old Orchard Road**
**Armonk, N.Y. 10504(US)**

(72) Inventor: **Chang, Philip Yen-Tang**
**6221 Ledge Mountain Drive**
**Austin Texas 78731(US)**
Inventor: **Coyle, Daniel Jerome, Jr.**
**2003 Ploverville**
**Austin Texas 78728(US)**
Inventor: **Howie, Lauren Denise**
**6714 Shiner Street**
**Austin Texas 78729(US)**
Inventor: **Lindsay, Bruce Gilbert**
**1185 Settle Avenue**
**San Jose California 95025(US)**

(74) Representative: **Grant, Iain Murray**
**IBM United Kingdom Limited Intellectual Property Department Hursley Park**
**Winchester Hampshire SO21 2JN(GB)**

(54) **Relational databases.**

(57) A plurality of packed descriptions is provided as a column in a table each entry containing data defining attributes associated with a different object (such as a table or view defined to the database) and all its component objects (such as related columns and indexes). Accessing the row corresponding to a particular object returns a description of all of the attributes of the object's component objects, as well as information describing the object itself. The packed description information is redundantly stored conventionally in other system catalogs for use IN at IN querying physical definitions of objects in a manner consistent with other database products. The database state information comprising the packed descriptions is retained in internal format whereas the correlative redundant information is in a user-readable external format. By denormalising the schema for schema data whereby identifying relationships between objects is simplified, time required for compilation of statements referencing objects is substantially reduced. All information concerning attributes of an object specified in statement and its component objects necessary to compile the statement may thereby be fetched from the packed description field corresponding to the object in one I/O operation. Objects' descriptions must otherwise be retrieved from numerous I/Os to separate system catalogs and rows collectively containing the descriptions.

# RELATIONAL DATABASES

This invention relates to relational databases, and, more particularly, to relational database systems accessed by means of data manipulation language statements.

All data in database systems is characterised by a schema description which itself is characterised by a schema describing it. This schema description defines the attributes and relationships between database objects. This information must be accessed during the compilation of DML (data manipulation language) statements in relational database operations in order to identify the attributes and relationships between the database objects that apply to the given statement.

As an example of the foregoing, one form of query language known as Structured Query Language (SQL) has gained wide acceptance allowing users to specify database operations as a high level, non-specific, and non-procedural statement. SQL is detailed in the Draft Proposal ANA Database Language SQL, Standard X3.135-1986, American National Standard Institute, Inc., 1430 Broadway, New York, NY 10018. Detailed discussion of SQL is also set forth in "IBM Database2 SQL Reference", Document No. SC26-4346-3, IBM Corporation, Armonk, New York.

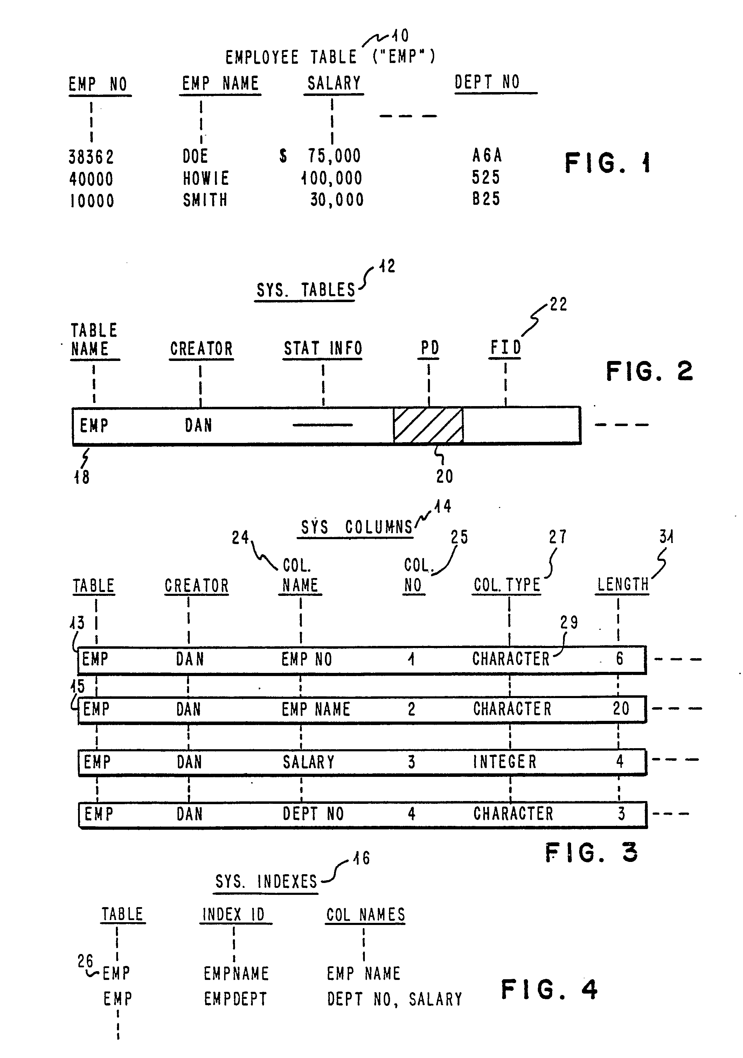

A user simply names an operation (fetch, update, insert, etc.) and then specifies which database objects (tables, views, or columns) upon which the operation is to be performed. For example, with reference to Fig. 1, depicted therein is a simplified example of relational data. Suppose the user of the relational database containing this information desires to retrieve the names, employee numbers, and salary of an employee referenced in the illustrated table. A corresponding SQL statement would be
SELECT NAME, EMP NO, SALARY FROM EMPLOYEE.

Since the SQL request is very high level, that is to say no files, indexes, etc. are specified, then a compiler must provide this information. The compiler must verify that NAME, EMP NO and SALARY are valid columns belonging to the table EMPLOYEE. Furthermore, the compiler must validate that the specified columns can be acted upon (i.e., retrieved), and that they can be used in the context specified. As an example, if the query statement included a further constraint "where name greater than $10000", this clearly would not be a valid statement inasmuch as the name (a character field) is sought to be compared to an inconsistent integer field containing $10000. Once all such validation checks have been performed, the compiler must further determine how to access the employee table, i.e., determine the EMPLOYEE table's physical file name, analyse available indexes, construct data structures necessary to retrieve the data, etc.

Thus, in order to perform the above required validation and synthesis of physical access tasks, definitional data needs to be stored describing the physical characteristics of all objects maintained by the database. This information is stored in a set of system catalogs (a conceptual example of which is depicted in Figs. 2-5). These catalogs are externally visible to users and define the physical attributes of all objects within a database and any relationships between the object and other objects within the database for which there are specified dependencies (e.g., column's association to a table, index's association to a column, etc.).

During compilation, information about all objects specified within the user's request must be accessed from the system catalogs in order to obtain the required physical descriptions of these objects.

Furthermore, descriptions of certain other objects with dependencies on the specified objects must also be accessed. This activity may typically result in numerous disk I/O's and subsequent locking of records describing those objects.

This can become quite costly in terms of compilation time necessary to execute a query. It will be noted that the system catalogs such as those depicted in Figs. 1-4 and comprised of table, column, and index descriptions, are conventionally each a separate file and each object is stored in a separate row. Accordingly, executing a query may require accessing all such system catalogs and numerous rows with correlative numbers of I/O operations. Because relational database state information is thus 1:n mapping from a table to n columns and 1:m mapping from a column to indexes associated therewith, a total of 1:n:m mapping of objects required for compilation could result (in a worst case) with nxm I/O's being thereby required. The aforementioned procedures are present in operation of conventional database systems preceding the subject invention, including systems known commercially under the name DB2 and SQL DS, both of which have been marketed by the IBM Corporation.

The approach of the prior database systems was to retrieve a row from the system catalogs for each object and component object referenced in a DML statement. In order to determine an objects components objects, a "link" connected the component object's catalog table to the parent object's catalog table. For example, a column object is a component of a table object - that is to say, a column cannot exist without a table. Therefore, a row in SYSCOLUMNS must contain a link to a row in SYSTABLES. This is achieved when the values of the columns TBNAME and TBCREATOR in a row of SYSCOLUMNS match the values of the column's NAME and CREATOR in a row of SYSTABLES. For a table or view object referenced in a DML statement, as many as all of the rows of SYSCOLUMNS that are linked to the given table may need to be retrieved by the compiler. Similarly, all of the index information must be accessed for a table reference.

This activity of course resulted in the previously noted numerous disk I/O's, subsequent locking of rows describing those objects and inability to provide the increased concurrency provided by the invention. For example, given a SELECT statement that returns all columns of a table having 100 columns and two indexes, 103 fetches would be required (one row describing the table object, a row describing each column object, and a row describing each index object). Furthermore, some of the columns that are retrieved for compilation purposes are also commonly queried by the user (such as the data type of a column) and are therefore kept in the catalogs in an external format (i.e., the character string "INTEGER" for example). This of course requires a mapping to an internal format each time they are received by the compiler.

From the foregoing, it may be readily perceived that a new technique was greatly needed and highly sought after which would provide dramatically improved performance in the analysis of database objects at compile time. Moreover, it was further highly desirable that such a novel system be provided which was nevertheless relatively inexpensive and easy to implement while at the same time providing compatibility with previously existing application programs which accessed the database.

In accordance with a first aspect of the present invention, there is provided a method for implementing a computerised relational database system comprising generating state information defining the relational database and storing the state information as a plurality of packed descriptions.

In accordance with a second aspect, there is provided a relational database system comprising a plurality of packed descriptions defining state information for the database.

In a specific embodiment of the invention to be described later, each packed description is provided as a column in a table with each entry containing data defining attributes associated with a different object (such as a table or view defined to the database) and all its component objects (such as related columns and indexes). Accessing the row corresponding to a particular object returns a description of all of the attributes of the object's component objects, as well as information describing the object itself. The packed description information is redundantly stored conventionally in other system catalogs for use at times other than during compilation of data manipulation language (DML) statements for compatibility whereby end users may query physical def- initions of objects in a manner consistent with other database products. The database state information comprising the packed descriptions is retained in internal format whereas the correlative redundant information is in a user-readable external format. By denormalising the schema for schema data whereby identifying relationships between objects is simplified, time required for compilation of DML statements is substantially reduced. All information concerning attributes of an object specified in a DML statement and its component objects necessary to compile the statement may thereby be fetched from the packed description field corresponding to the object in one I/O operation. Objects' descriptions must otherwise be retrieved from numerous I/Os to separate system catalogs collectively containing the descriptions.

The present invention will be described further by way of example with reference to an embodiment thereof as illustrated in the accompanying drawings in which:

Fig. 1 is a simplified example of relational data in the form of an employee table which might be accessed by the system of the present invention.

Fig. 2 is an illustration of a system catalog describing the details of the table of Fig. 1 as well as other tables in the database.

Fig. 3 is an illustration of a system catalog describing details of the columns of the tables described by the catalog of Fig. 2.

Fig. 4 is an illustration of a system catalog describing the details of indexes which may be used for accessing the columns in the columns described by the catalog of Fig. 3.

Fig.5 is an illustration of the function of an index such as those depicted in Fig. 4.

Fig. 6 is a conceptual illustration of the format of a generic packed description column field such as might appear in a record in the system catalog of Fig. 2.

Fig. 7 is an illustration of a specific packed description in the format depicted in Fig. 6 corresponding to the employee table of Fig. 1 and correlative system catalogs of Figs. 2-4.

Fig. 8 is a flow diagram of a computerised process to be implemented by a relational database system whereby the column description components of the packed description of the present invention may be generated and maintained as well as the conventional SYS.COLUMNS file.

Fig. 8A is a flow diagram of an alternate embodiment of the process represented by the flow diagram of Fig. 8.

Fig. 9 is a flow diagram corresponding to that of Fig. 8 for generating and maintaining index description components of the packed description as well as the conventional SYS.INDEXES file.

Fig. 10 is a simplified flow diagram of a computerised process whereby the packed description of the present invention is accessed and used.

Fig. 11 is a general schematic illustration of a computerised relational database system of the present invention for generating and utilising the packed descriptions.

With reference to Figs. 1-5 a general description will be presented of both the problems addressed by the present invention and the general approach to their solution. This will be followed in turn with a more detailed description of a particular embodiment thereof.

Referring first to Fig. 1 depicted therein is a representative general and simplified example of data which is sought to be related or accessed in a relational database system. In this example an employee table 10 contains a number of records for each employee containing information such as the employee number, name, salary and department number shown in columns 1-4, respectively. In a conventional relational database, a plurality of system catalogs are provided such as those of Figs. 2-4. In Fig. 2 a schematic illustration of a conventional system catalog 12 is provided, the purpose of which is to provide details about a plurality of tables such as that of Fig. 1 which may comprise the database. For example, there may be additional tables such as an employee location table having a column for the employee number and another one indicating the site location wherein the employee's department is located and hence where the employee works. Due to common elements in these various tables relational information may be derived by using this commonality. For example, because the employee number is common to the aforementioned employee table and site location table, this piece of information may be used to relate a particular employee's name from the first table to the location where the employee works derived from the second table.

In Fig. 2, the SYS.TABLES catalog 12 will include a record entry or row for each table, the one shown in Fig. 2 at reference number 18 relating to the employee table of Fig. 1. Columns in the SYS.TABLES catalog might include the table's name ("EMP" with respect to employee table 10), the person who created the table, and statistical information used at compilation time for data manipulation language statements or the like or for other purposes well known in the art. Additionally, for each record of the SYS.TABLES catalog 12, a file i.d. 22 column will be provided whereby a file location is given associated with each record from which additional information on the table may be derived. It will be noted in Fig. 2 that yet an additional column PD 20 is shown schematically therein in the cross-hatched portion of the record displayed there. This illustrates the inclusion of an additional field for each record of the SYS.TABLES catalog 12 not known in the prior art which is part of the present invention and to be hereinafter described in greater detail. For present purposes it will be sufficient to note that PD refers to a packed description which contains, in a long field file format, descriptions of all component objects of the particular object associated with the record in which the particular PD appears. A record in SYS.TABLES will exist for each object of the database such as a table or view.

Fig. 3 shows an example of a SYS.COLUMNS catalog portion of the conventional system catalogs which might comprise a portion of the database in the example under discussion. The purpose of the SYS.COLUMNS catalog is to provide a description of the attributes of all the columns of each of the tables in the SYS.TABLES portion of the system catalogs. More generally, the SYS.COLUMNS and SYS.INDEXES catalogs, representative examples of which are shown in Figs. 3 and 4, contain information about component objects intended to describe the attributes in greater details of an object of the database to which they are uniquely associated (such as the table of Fig. 1 described in the system tables of Fig. 2).

Still referring to Fig. 3, accordingly, it will be noted that each record in the SYS.COLUMNS catalog 14 shown therein contains a number of fields describing attributes of a correlative one of the columns in the employee table 10. Thus the first record 13 shown describes attributes of the first column of the employee table 10, the second record of the system columns 14 describes the second column (employee name of table 10), and so on. Referring to the first record 13 more specifically, for example, EMP in the "Table" column as the first field thereof indicates that the data to the right is further information or attributes about a column appearing in the employee table. The entry "EMP NO" under column name 24 for record 13 in the SYS.COLUMNS catalog 14 can be seen to correspond to the first column EMP NO column name of the table "EMP" to which it corresponds. Following EMP NO in record 13 the number 1 under COL NO, 25, of systems columns 14 indicates this is the first column in the employee table 10. The next column TYPE, 27, in record 13 of the SYS.COLUMNS catalog 14, has an entry CHARACTER, 29, indicating that the fields in the EMP NO column are character data. Finally, in the last field of record 13 in SYS.COLUMNS 14, the column LENGTH, 31, has an entry "6" indicating that a maximum of 6 bytes is permissible for data appearing in the EMP NO column. Whereas records have been shown in the SYS.COLUMNS catalog 14 pertaining only to corresponding columns in the EMP TABLE, it will be appreciated that further such records will appear describing the attributes of columns appearing in other tables or views of the database, and that they will have corresponding entries in the TABLE column of Fig. 2 corresponding to the name of the particular table or view.

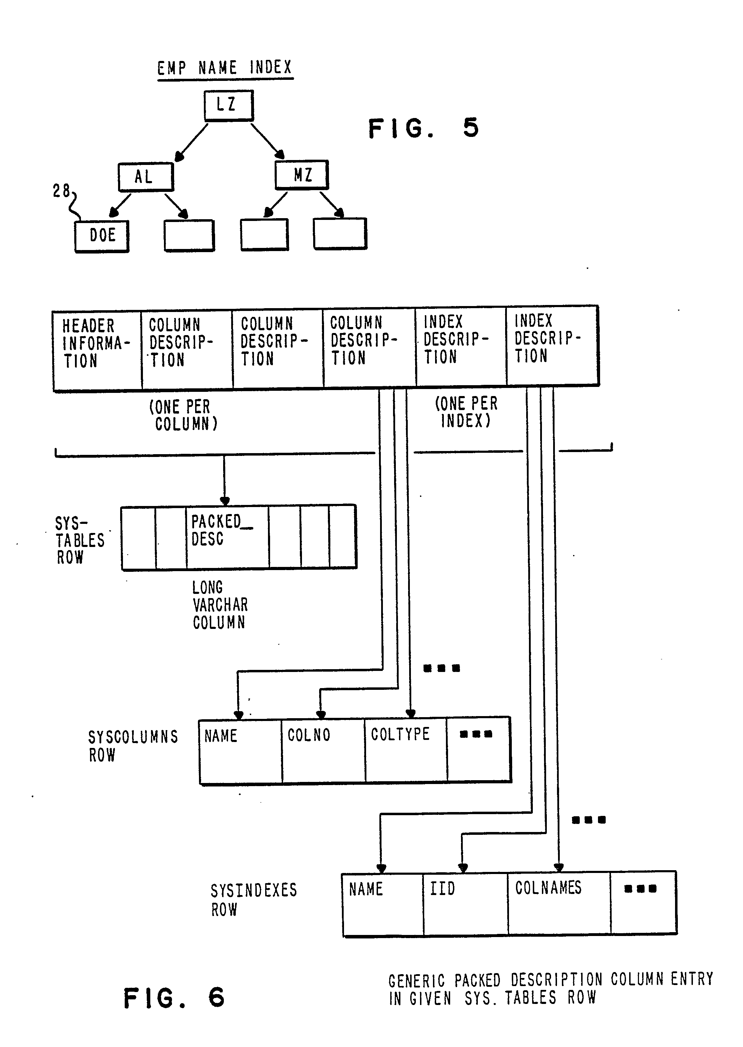

Referring to Fig. 4 in addition to columns being component objects of an object to which they relate (and having attributes described in the SYS.COLUMNS catalog 14) yet an additional class of component objects of each object are definable. These are indexes which, continuing with the illustration under consideration, are depicted therein as the SYS.INDEXES catalog 16. As is well known in relational databases, indexes are provided to facilitate an efficient recovery of data. In order to understand the purpose of such indexes generally, in Fig. 5 a schematic illustration is shown therein of, for example, how an employee name index such as that shown as record 26 in the SYS.INDEXES catalog 16 would function. Suppose that an employee table 10 has been built during operation of the database from time to time wherein data is added to the table by means of insert statements such as
INSERT INTO EMP VALUES (38362, DOE, 75000, A6A)

This statement would have been used to input the data relating to Doe eventually appearing as shown in table 10. Suppose further that a statement is thereafter specified seeking to access some of this data relating to employees which may include Doe, as, for example, by specifying the statement:
SELECT*FROM EMP WHERE DEPT NO = A6A AND SALARY > 50,000

This query will be recognised as being in an SQL format which is a widely accepted query language. Upon compiling the statement and execution whereupon a file on Doe is required, it is necessary to find the record i.d. associated with this file for Doe. As shown in the EMP NAME index of Fig. 5, this may be in a conventional B tree structure well known in the art. In a simplified example therein by sorting through the nodes alphabetically corresponding to the spelling of Doe eventually the record i.d. 28 will be reached containing the location of the file having the desired information on Doe.

One problem with the prior art is that the aforementioned system catalogs including the system tables 12, system columns 14, and system indexes 16 are conventionally stored in memory such that a separate I/O operation is required to retrieve data from each such system table. In the compilation of a DML statement such as that shown above in the SQL format which is necessary for accessing data, conventionally it was necessary to access each of the system catalogs corresponding to each object defined in the DML statement in order to return the query result. This resulted in numerous I/O operations and attendant record locks which increased with complexity of the query resulting in serious degradation in performance at compile time of the DML statement as well as concurrency problems. As to the latter problem, prior databases provided for the relatively large granularity of locking on a data page level. This was eventually found to be highly undesirable in that for database systems granting access to increasing larger numbers of users, concurrency became a problem, i.e., preventing one user from accessing the database who is locked out during use by another in order to preserve the consistency thereof. While this may not have been a problem early in the art, with the vastly increasing numbers of users of the database, the serious limitations of prior systems became apparent. Users were frequently locked out because of row locking and inordinately long time periods necessary to compile query statements due to the aforementioned numerous I/O operations.

In summary then, prior to a more detailed description of the embodiment of the present invention, it will be noted that all relational databases must include a set of system catalogs such as those described with reference to Figs. 2-4. They are conventionally comprised of descriptions of tables and views, referred to as objects, and descriptions of correlative columns and indexes referred to as component objects hereinafter. Each catalog itself is a table and for each such table there is one record in system tables defining the table's attributes. In like manner for each column of each table there is one record in system columns defining that column and its attributes. These system catalogs are for purposes of permitting an end user to query the database and find out the objects and component objects in the database and their attributes.

It will be noted that this end user conventionally could not modify such catalogs but only query them and that a function of the database manager was to keep track of such catalogs, revising them from time to time as the database changed. Thus, the catalogs could be viewed as the state information for the database at any time which could be known through the catalogs. As aforementioned, a serious drawback of prior systems was that in order to solve a query it is necessary to compile the query statement in order to validate and synthesise it such as in verification of syntax and semantics and the like. However in performing this compilation it was in turn necessary to look up information in the system catalogs. Such accessing of information was extremely costly in performance though since it may be necessary for example to access three different tables and numerous database rows. Each such table in the prior art had its own dos file though necessitating potentially I/O to system tables, n I/O's to system columns, and m I/O's for each index associated with the system columns and the associated rows. Moreover during such accessing locks would be obtained further slowing down compilations and adversely affecting concurrency.

To avoid these problems, the necessary information for compiling the query statement is stored in a plurality of packed descriptions. In a specific embodiment to be described later, a single field contains information previously spread collectively and conventionally over numerous system catalogs and rows. The present invention obviates the need to access each of these individual files separately with attendant I/Os and performance degradation whereby the information could now be obtained in one file location with a single I/O.

Preferably, while creating or modifying system catalog information, the packed description information is also created or modified and is stored, not only in the packed description, but also in individual conventional SYS.TABLES, SYS.COLUMNS, and SYS.INDEXES catalogs. Thus, as the database changes, the created packed description is updated including additions and modifications and thus contained in the conventional tables.

By redundantly providing the packed description information otherwise conventionally present in the system catalogs portability of programs across systems can be obtained. Prior application programs for example required individual access to these system catalogs files during execution of the application. By providing this information redundantly, provision of the packed description will be transparent to the application and user. Moreover, the method for employed building and maintaining an efficient schema representation has the significant aforementioned benefit of minimising the I/O process at compilation time of the DML statement by reducing the 1:n:m mapping to one field thereby providing a 1:1 correspondence.

It will be noted that an apparent drawback to the present invention is the increased storage (disk or other media) required for redundantly storing the state information in the packed description as well as conventionally in the system catalogs and the slightly longer time which may be taken at the "build" of the information, i.e., the additional time involved in the creation and modification of the packed description data. However, the dramatic improvement in performance resulting from the present invention at DML compile time as well as the increased frequency of database querying relative to creations and updates has rendered the invention of significant benefit.

In accordance with the present invention therefore, packed descriptions are provided such as a description indicated by reference numeral 20 in the SYS.TABLES catalog 12 of Fig. 2. This packed description preferably contains all of the system catalog information related to its corresponding object necessary in the compiling of a statement containing that object, and preferably is stored in a long field file whereby all of this necessary information about component objects of this object may be accessed during one I/O operation.

With reference to Fig. 6, there is shown depicted therein a schematic illustration of a generic packed description column entry of an embodiment of the present invention for a given table's row. A separate such field entry will be provided in the SYS.TABLES catalog 12 for each object and record to which it corresponds such as those shown in the SYS.TABLES catalog 12.

Referring to Fig. 6, each packed description in one embodiment will preferably refer to a specific database object and will be contained in a distinct long field file in a generic format such as that shown therein. The packed description will include header information for purposes well known in the art, followed by a plurality of column descriptions and thence a plurality of index descriptions, both the column and index descriptions being all of those related to the particular object to which the particular packed description is associated. Each such packed description will correspond to a different row of the SYS.TABLES catalog. In the case of a table object such as the employee table 10 in the corresponding packed description, there will be a column description for each column in the table. Each such column description will correspond to a row in the SYS.COLUMNS catalog corresponding to the particular table and will include information such as the column name, number, type (integer, character, long field, etc.). Finally, in like manner, as shown in Fig. 6, a separate index description will be provided for each index relating to the employee table object and will thus correspond to a separate row entry in the SYS.INDEXES catalog, having information regarding the table name to which the particular index relates, index i.d., column names to which the index is associated, and the like.

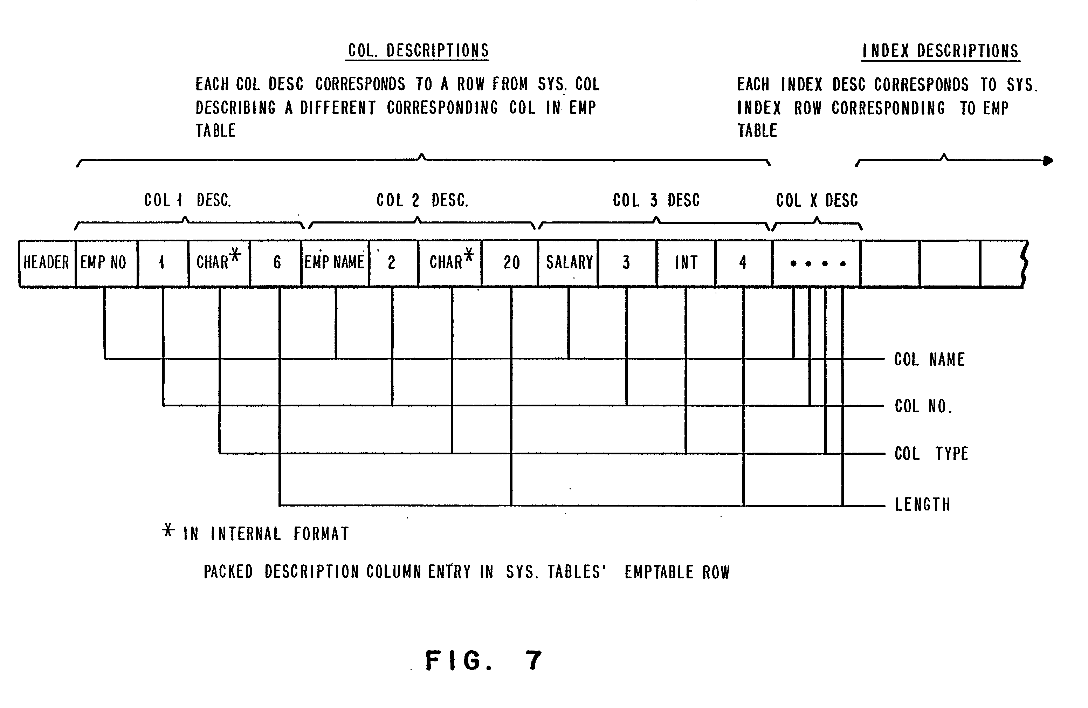

In Fig. 7 a simplified example of one such packed description is shown as it relates to the system catalogs in the example shown with reference to Figs. 1-4. For brevity it will be noted that the index descriptions have been deleted associated with the example.

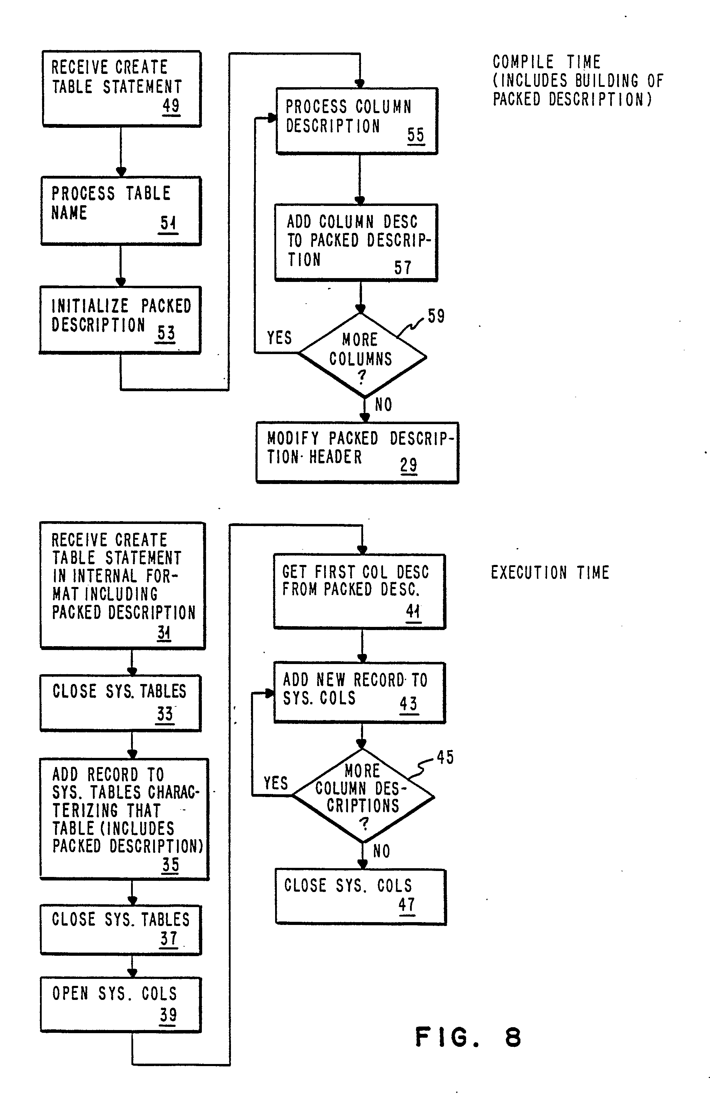

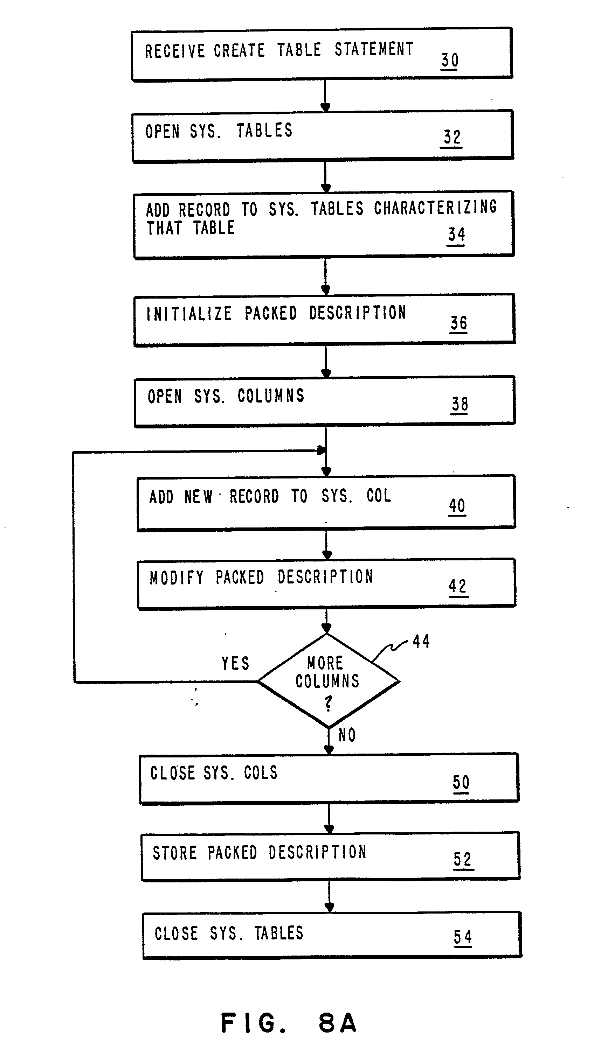

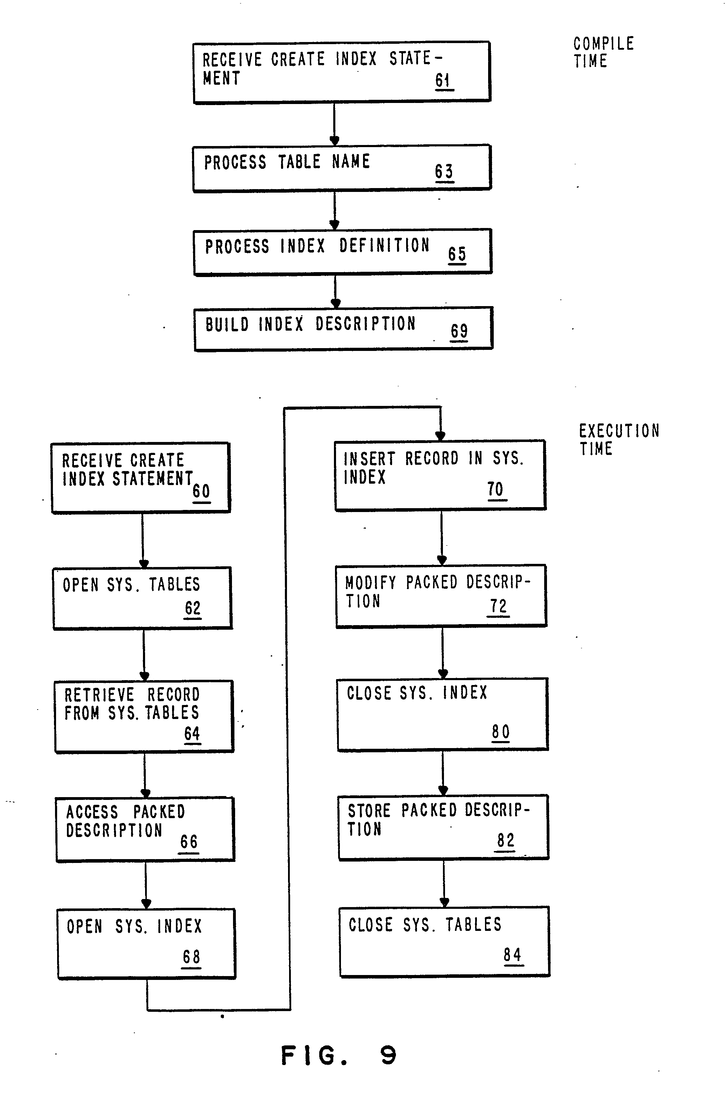

Fig. 8 and Fig. 8A indicate a preferred and alternate embodiment, respectively, of a flow diagram of a computerised process for creating, modifying, and updating the column description portion of the packed description as well as the correlative conventional system catalogs employed with existing database application programs. Similarly, Fig. 9 depicts such a flow diagram for a computerised process for creating, modifying and updating the portion of the packed description referring to the object's indexes as well as performing like operations for the conventional SYS.INDEXES catalog. It will be recalled that a preferred feature of the invention is to provide this packed description information in an internal format such as in binary form which is not readily accessible and to provide the redundant system catalogs information in an external or user friendly and accessible form for the more conventional use. In this manner, utility of the present system is retained while nevertheless providing compatibility with presently existing database systems and applications.

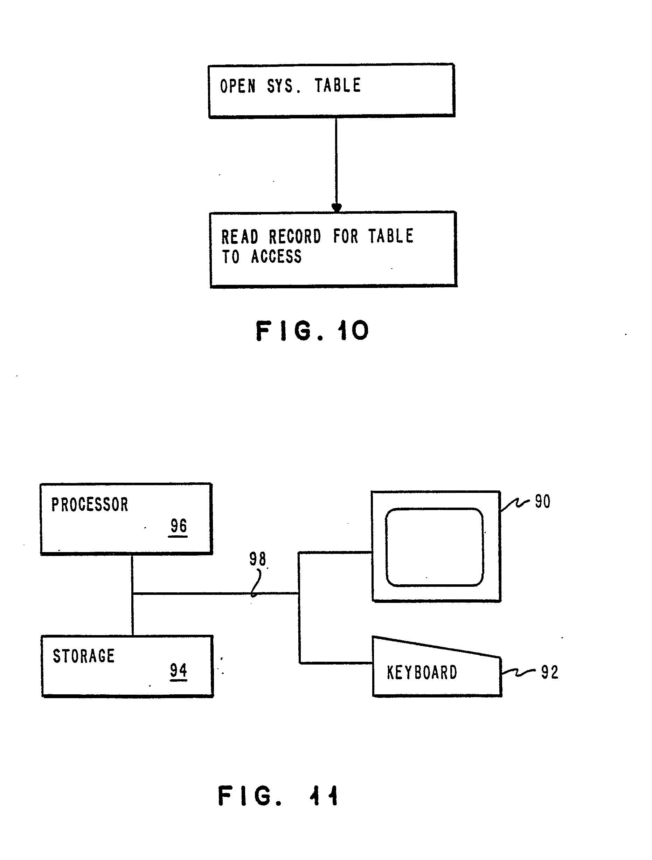

With reference to Fig. 10, a general flow diagram is shown there for a computerised process for using the packed description information generated, stored and updated with respect to the SYS.COLUMNS and SYS.INDEXES catalogs as shown in Figs. 8, 8A and 9.

With reference to Fig. 8, it will be recalled that this figure illustrates a preferred embodiment of a computerised process for creating, modifying, and updating the column descriptions of the packed description and the correlative conventional system catalogs employing a compiler system (as opposed to the embodiment of Fig. 8A which uses an interpretive system). At compile time, which includes the building of the packed description, when a create table statement is received, 49, the table name is first processed at 51. Next, the packed description is initialised, 53, followed by processing of the column definition 55 and the adding of the correlative column description to the packed description, 57. A determination is then made at 59 as to whether more columns exist and, if so, the process loops back to step 55 to continue processing additional column definitions. When no additional columns remain, the process exits the No branch of block 59 whereupon the packed description header is modified at 29.

Continuing with Fig. 8, at execution time the software executes the following steps. First, upon receipt by the database program of a create table statement (in internal format which includes the packed description) at 31, SYS.TABLES is opened at 33. A record is then added to SYS.TABLES at 35 characterising that table (which includes the packed description), whereupon SYS.TABLES is closed at 37. Next, SYS.COLUMNS is opened at 39, and the first column description from the packed description is fetched at 41. Next, a new record is added to SYS.COLUMNS, 43, and a determination is then made at 45 as to whether more column descriptions are required. If Yes, the process loops back to step 43 to add additional records to SYS.COLUMNS. If, on the other hand, no more column descriptions are required, the process exits the No of 45 whereupon the SYS.COLUMNS is closed at 47.

Referring back again to Fig. 8A, this alternate embodiment of the process of Fig. 8 will be recognised as being for an interpretive system in contrast to the compiler system of Fig. 8. First a statement will be received by the process or routine at reference numeral 30 indicating the routine is being called to create or modify a table. The process will accordingly open the SYS.TABLES file, 32, create or add a record to the conventional SYS.TABLES catalog, 34, characterising that table, whereupon the packed description including header and trailer information, will be initialised at 36. The SYS.COLUMNS file will then be opened at 38 and the newly created or additional record of column information thence added to the conventional SYS.COLUMNS catalog at 40. At 42 the packed description will be added to or modified with the similar column information whereupon the process at 44 checks to determine whether it is desired to add or modify new columns. If so, the process loops at 46 to repeat the steps 40 and 42. This will continue until the check at 44 indicates no more columns need be created or modified. Once the columns portion of the packed descriptions have been created and stored for every column of the new or modified table, the process exits at 48 to close the SYS.COLUMNS file at 50. At 52 the packed description information of steps 36 and 42 is stored in its correlative field in memory, whereupon the SYS.TABLES file is closed at 54.

Similarly with respect to Fig. 9 and index information, in the preferred embodiment which is a compiler system, at compile time the database receives an indication that an index statement is to be created or modified at 61. The correlative table name is then processed at 63 followed by processing of the index definition at 65. The index description is thereafter built at step 69. At execution time, when the database receives an indication (in internal format) that an index statement is to be created or modified at 60, again the SYS.TABLES file is opened at 62 and the record retrieved from the SYS.TABLES catalog at 64. The corresponding packed description is accessed at 66 from the corresponding packed descriptor location obtained from the table at 64 whereupon the SYS.INDEXES file is opened at 68. At 70, a record describing the particular index being created or modified is inserted in the conventional SYS.INDEXES catalog followed by modification at 72 of the corresponding index description portion of the correlative packed description built by the compiler. Since only one index is created per CREATE INDEX statement, process exits at 78 to close the SYS.INDEXES file at 80. The packed description relating to the index previously thus generated at 72, is thence stored in the packed description field at 82, and finally the process closes the SYS.TABLES file at 84.

In Fig. 10, the process is shown whereby the packed descriptions of the present invention are employed by a database system. It will be recalled that each reference to an object such as a table or view during compilation of a DML statement for fetching, insertion, update or deletion, requires access to the object's description contained in the system catalogs as well as the packed description. The first time the table or view object reference in the DML statement is made, the system table is opened at 86 and the corresponding record is read at 88 for the table to access which contains the correlative packed description relating to the object. Once the fetch request has been issued to retrieve the appropriate packed description from the database into memory, when the same object is referred to again in the DML statement, the compiler thereby may reference the packed description already in memory thereby saving I/O. With the appropriate packed description retrieved from memory in its entirety in one I/O operation, the compiler, once it has thus gained access to the table or view's packed description, traverses through it to obtain the necessary information about the object and component objects.

Fig. 11 is a simplified schematic diagram of a computerised relational database system employing the packed description feature of the present invention. First a processor 96 is provided which may be in the form of any number of micro, mini and main frame computers currently available such as those of the conventional and familiar personal computer of "PC" type. A memory 94 is further provided for storing the database program including the computerised programs for implementing the processes described with reference to Figs. 8-10. Additionally, the storage 94 (in the form of a hardfile or the like) stores relational data such as that of Fig. 1 to be queried through use of the computerised relational database and the packed descriptions of the present invention. A keyboard 92 is provided for user input to the system which may include additional data inputs to the relational data stored in the storage 94, updating and editing commands therefor, as well as the various database search commands or queries which may employ the packed descriptions during compilation in the manner hereinbefore described. A terminal 90, which may be in any conventional form, is further provided for providing the user with perceptible outputs from the database system and the keyboard 92. An appropriate interconnection 98 well known in the art which may include conventional address command and control bus lines is provided interconnecting the processor 96, memory 94, keyboard 92, display device 90, and secondary storage devices.

The packed description of the invention is preferably stored in the data base as a character string column preferably using the SQL data type LONG VARCHAR. This is a varying length character string up to 32,700 bytes in length. Internally, C language structures well known in the art are used to impose a definition on this column. The packed description, as aforesaid, consists of header information, followed by the series of column descriptions (one for each column of the table or view), and finally followed by a series of the previously described index descriptions (one for each index defined on the table). The header portion and the column descriptions of the packed description are built when a CREATE TABLE statement or CREATE VIEW statement is compiled. When the statement is executed, as with the other relational database products, a row describing the table or view is generated in the SYS.TABLES catalog table, and a row is generated in the SYS.COLUMNS catalog table for each column. The packed description is one of the columns in a row of the SYS.TABLES catalog.

Subsequent column descriptions are added by an ALTER TABLE statement. The packed description column for the appropriate table is updated to contain the additional column description(s), changes are made to the header information (such as number of columns, offset into index information, etc.), and the COLCOUNT column of the row is updated. Similarly, an index description is added by a CREATE INDEX statement. In this case, the packed description for the table is updated to contain the additional index description and changes are made to the header information (such as number of indexes). Consistent with other database products, a row is added to SYS.COLUMNS catalog for each new column and a row is added to SYS.COLUMNS catalog for each new index.

The values within the packed description itself are used in generating the other catalog columns. For example, with reference to Fig. 8A the values in a row in SYS.COLUMNS catalog are derived from a particular column description within the associated table or view's packed description. Thus, the information contained in these columns is guaranteed to be consistent with the data stored in the packed description column.

Furthermore, the packed description is updated during the execution of a utility program which gathers statistical information about a table and/or its indexes. This information is used during compilation in determining the optimal access strategy to use in accessing the table. As with other database products, each statistic is also stored in a column of SYS.TABLES and/or SYS.INDEXES to allow easy access by the end-user.

After the statement defining a table or view is executed, the packed description for the object can be accessed by the compiler. Each reference to a table or view during the compilation of a subsequent DML statement (i.e., fetch, insert, delete, etc.) requires access to the object's packed description. The first time a table or view object is referenced in the statement, the compiler must issue a fetch request to retrieve the packed description from the database into memory. If the same object is referenced again in a statement, in most instances the compiler will reference the packed description that is already in memory. Once the compiler has gained access to a table or view object's packed description, it traverses through it to obtain information about the object and all of its component objects as aforesaid.

Although the retrieval of the packed description has previously been referred to as requiring one I/O operation, in a more general sense retrieval of the packed description by the compiler may consist logically of a fetch of data from a single row. For instance, this fetch request may actually result in two physical I/O operations, given a particular implementation which requires two rows rather than one in order to store all of the data for one long field.

While the invention has been shown and described with reference to particular embodiments thereof, it will be understood by those skilled in the art that the foregoing and other changes in form and details may be made therein without departing from the invention as claimed.

## Claims

1. A method for implementing a computerised relational database system comprising:
generating state information defining the relational database; and
storing the state information as a plurality of packed descriptions.

2. A method as claimed in claim 1 wherein each packed description is a field.

3. A method as claimed in claim 1 or claim 2 wherein the state information is system catalogs of the relational database.

4. A method as claimed in claim 3 wherein the system catalogs define attributes of SYS.TABLES, SYS.COLUMNS, and SYS.INDEXES of the relational database.

5. A method as claimed in any preceding claim wherein the state information is stored in internal format.

6. A method as claimed in any preceding claim wherein each the packed description is a different long field.

7. A method as claimed in any preceding claim wherein each the packed description is associated with a different object of the relational database and includes data defining component objects of the object.

8. A method as claimed in claim 7 wherein the object comprises a table or view and the component objects comprise columns and indexes associated with the tables or views.

9. A method as claimed in claim 8 wherein each the object is functionally related to a different the table or view of the system tables or system views, respectively.

10. A method as claimed in any preceding claim including the step of redundantly storing the state information as a set of system catalogs of the relational database in external format.

11. A method as claimed in any preceding claim wherein each the packed description is accessible by substantially a single I/O operation.

12. A method as claimed in claim 11 wherein the system catalogs are stored in a plurality of locations each requiring a separate I/O operation to access.

13. A method according to any preceding claim comprising:
updating the state information during operation of the relational database; and
modifying the plurality of packed descriptions in functional response to the updating of the state information.

14. A method as claimed in claim 13 further comprising modifying the system catalogs in functional response to the updating of the state information and the modifying of the plurality of packed descriptions.

15. A method as claimed in any preceding claim further comprising the steps of:
generating a query statement;
retrieving at least one of the packed descriptions as a function of the query statement; and

compiling the query statement in functional response to the retrieved at least one of the packed descriptions.

16. A method as claimed in claim 1 comprising:

generating a statement for accessing the database having specified therein at least one object of the database;

generating a plurality of packed descriptions each associated with a different one of the at least one objects;

storing each the plurality of packed descriptions as a different field in a system table of the relational database; and

accessing during compilation of the statement at least one of the stored different fields for each the at least one object.

17. A method as claimed in any one of the preceding claims, for implementing a relational database system of the type having a plurality of system catalogs and wherein a statement referencing a database object is compiled, the method, comprising:

a.) generating representations of attributes of an object of one of the system catalogs;

b.) initialising a packed description field; and

c.) storing the representations of attributes of the object of one of the system catalogs in the packed description field.

18. The method of Claim 17 further including

d.) redundantly storing the representations of attributes of an object of the one of the system catalogs in the one of the system catalogs.

19. The method of Claim 18 further including

e.) generating representations functionally related to changes in at least one of the attributes; and

f.) modifying the packed description field with the representations functionally related to the changes.

20. The method of Claim 19 further including

g.) redundantly storing the representations functionally related to the changes in the one of the system catalogs.

21. The method of Claim 20 further including

h.) generating representations of attributes of a component object the object; and

i.) storing the representations of attributes of the component object of the object in the packed description field.

22. The method of Claim 21 further including:

j.) redundantly storing the representations of attributes of the component object of the object in a corresponding one of the system catalogs.

23. The method of Claim 22 further including

k.) repeating steps h.), i.) and j.) for next component objects of the object until the packed description and the system catalogs contain attributes of the object and substantially all the component objects corresponding to the object.

24. A method as claimed in any one of claims 21 to 23 wherein the data defining the object and the functionally related component objects are stored as a row in a system catalog.

25. A method according to claim 24 when dependent on claim 23, wherein the data defining a the next object and functionally related next component objects are stored as a next row in the system catalog.

26. A relational database system comprising a plurality of packed descriptions for defining state information for the database.

27. A system as claimed in claim 26 wherein each packed description is a first field defining attributes of a plurality of objects of the database.

28. A system as claimed in Claim 27 further comprising a plurality of second fields of representations redundantly defining the attributes of the plurality of objects.

29. A system as claimed in Claim 28 wherein portions of the plurality of second fields each define attributes corresponding to a correlative different system catalog of the system.

30. A system as claimed in Claim 29 wherein the different system catalogs correspond to members selected from a group including SYS.VIEWS, SYS.TABLES, SYS.COLUMNS, and SYS.INDEXES.

31. A system as claimed in any of claims 27 to 30, wherein the first field contains substantially all data corresponding to the attributes of the objects required to compile one of the statements specifying the objects.

EMPLOYEE TABLE ("EMP") ~10

| EMP NO | EMP NAME | SALARY | DEPT NO |
|--------|----------|--------|---------|
| 38362 | DOE | $ 75,000 | A6A |
| 40000 | HOWIE | 100,000 | 525 |
| 10000 | SMITH | 30,000 | B25 |

FIG. 1

SYS. TABLES ~12

| TABLE NAME | CREATOR | STAT INFO | PD | FID | |
|------------|---------|-----------|-----|-----|---|
| EMP | DAN | — | ////// | | - - - |

FIG. 2

SYS COLUMNS ~14

| TABLE | CREATOR | COL. NAME | COL. NO | COL. TYPE | LENGTH | |
|-------|---------|-----------|---------|-----------|--------|---|
| EMP | DAN | EMP NO | 1 | CHARACTER | 6 | - - - |
| EMP | DAN | EMP NAME | 2 | CHARACTER | 20 | - - - |
| EMP | DAN | SALARY | 3 | INTEGER | 4 | - - - |
| EMP | DAN | DEPT NO | 4 | CHARACTER | 3 | - - - |

FIG. 3

SYS. INDEXES ~16

| TABLE | INDEX ID | COL NAMES |
|-------|----------|-----------|
| EMP | EMPNAME | EMP NAME |
| EMP | EMPDEPT | DEPT NO, SALARY |

FIG. 4

EMP NAME INDEX

FIG. 5

| HEADER INFORMA-TION | COLUMN DESCRIP-TION | COLUMN DESCRIP-TION | COLUMN DESCRIP-TION | INDEX DESCRIP-TION | INDEX DESCRIP-TION |
|---|---|---|---|---|---|

(ONE PER COLUMN)          (ONE PER INDEX)

SYS-TABLES ROW

| | | PACKED_ DESC | | | |
|---|---|---|---|---|---|

LONG VARCHAR COLUMN

SYSCOLUMNS ROW

| NAME | COLNO | COLTYPE | ••• |
|---|---|---|---|

SYSINDEXES ROW

| NAME | IID | COLNAMES | ••• |
|---|---|---|---|

GENERIC PACKED DESCRIPTION COLUMN ENTRY IN GIVEN SYS. TABLES ROW

FIG. 6

COL. DESCRIPTIONS

INDEX DESCRIPTIONS

EACH COL DESC CORRESPONDS TO A ROW FROM SYS. COL
DESCRIBING A DIFFERENT CORRESPONDING COL IN EMP
TABLE

EACH INDEX DESC CORRESPONDS TO SYS.
INDEX ROW CORRESPONDING TO EMP
TABLE

COL 1 DESC.   COL 2 DESC.   COL 3 DESC   COL X DESC

| HEADER | EMP NO | 1 | CHAR* | 6 | EMP NAME | 2 | CHAR* | 20 | SALARY | 3 | INT | 4 | • • • • | | | |

COL NAME

COL NO.

COL TYPE

LENGTH

* IN INTERNAL FORMAT

PACKED DESCRIPTION COLUMN ENTRY IN SYS. TABLES' EMPTABLE ROW

EP 0 336 580 A2

**FIG. 7**

COMPILE TIME
(INCLUDES BUILDING OF
PACKED DESCRIPTION)

RECEIVE CREATE
TABLE STATEMENT
49

PROCESS TABLE
NAME
51

INITIALIZE PACKED
DESCRIPTION 53

PROCESS COLUMN
DESCRIPTION 55

ADD COLUMN DESC
TO PACKED DESCRIP-
TION 57

MORE
COLUMNS
? 59

YES

NO

MODIFY PACKED DESCRIP-
TION HEADER 29

EXECUTION TIME

RECEIVE CREATE
TABLE STATEMENT
IN INTERNAL FOR-
MAT INCLUDING
PACKED DESCRIPTION
31

CLOSE SYS. TABLES
33

ADD RECORD TO
SYS. TABLES CHARAC-
TERIZING THAT
TABLE (INCLUDES
PACKED DESCRIPTION)
35

CLOSE SYS. TABLES
37

OPEN SYS. COLS
39

GET FIRST COL DESC
FROM PACKED DESC.
41

ADD NEW RECORD TO
SYS. COLS 43

MORE
COLUMN DES-
CRIPTIONS
? 45

YES

NO

CLOSE SYS. COLS
47

FIG. 8

RECEIVE CREATE TABLE STATEMENT 30

OPEN SYS. TABLES 32

ADD RECORD TO SYS. TABLES CHARACTERIZING THAT TABLE 34

INITIALIZE PACKED DESCRIPTION 36

OPEN SYS. COLUMNS 38

ADD NEW RECORD TO SYS. COL 40

MODIFY PACKED DESCRIPTION 42

MORE COLUMNS ? 44

YES

NO

CLOSE SYS. COLS 50

STORE PACKED DESCRIPTION 52

CLOSE SYS. TABLES 54

FIG. 8A

COMPILE
TIME

RECEIVE CREATE INDEX STATE-
MENT                          61

PROCESS TABLE NAME            63

PROCESS INDEX DEFINITION      65

BUILD INDEX DESCRIPTION       69

EXECUTION
TIME

RECEIVE CREATE
INDEX STATEMENT 60

OPEN SYS. TABLES
62

RETRIEVE RECORD
FROM SYS. TABLES
64

ACCESS PACKED
DESCRIPTION    66

OPEN SYS. INDEX
68

INSERT RECORD IN SYS.
INDEX              70

MODIFY PACKED DESCRIP-
TION               72

CLOSE SYS. INDEX
80

STORE PACKED DESCRIP-
TION              82

CLOSE SYS. TABLES
84

FIG. 9

```
┌─────────────────────────┐
│  OPEN SYS. TABLE        │
│                         │
└───────────┬─────────────┘
            │
            ▼
┌─────────────────────────┐
│  READ RECORD FOR TABLE  │
│  TO ACCESS              │
└─────────────────────────┘
```

# F I G. 10

```
┌──────────────────┐                    ┌──────────────────┐
│ PROCESSOR        │                    │  ┌────────────┐  │  ～ 90
│             96   │                    │  │            │  │
└────────┬─────────┘              ┌─────┤  │            │  │
         │              98        │     │  └────────────┘  │
         │              )         │     └──────────────────┘
         ├──────────────────────────┤
         │                        │     ┌──────────────────┐
┌────────┴─────────┐              │     │                  │
│ STORAGE          │              └─────┤  KEYBOARD        │  ～ 92
│             94   │                    │                  │
└──────────────────┘                    └──────────────────┘
```

# F I G. 11